# EUROPÄISCHE PATENTSCHRIFT

(11) **EP 3 186 525 B1**
(45) Veröffentlichungstag und Bekanntmachung des Hinweises auf die Patenterteilung: **08.08.2018**
(21) Anmeldenummer: 15763827.1
(22) Anmeldetag: 11.08.2015
(51) Int. Cl.: F16D 13/38, F16D 13/68, F16D 21/06

(54) **DOPPELKUPPLUNG**
DUAL CLUTCH
EMBRAYAGE DOUBLE

(30) Priorität: 29.08.2014 DE 102014217277; 23.03.2015 DE 102015205146
(43) Veröffentlichungstag der Anmeldung: 05.07.2017
(73) Patentinhaber: Schaeffler Technologies AG & Co. KG, 91074 Herzogenaurach (DE)
(72) Erfinder: CHAMBRION, Martin, 67150 Erstein (FR); RUF, Johannes, 77815 Bühl (DE)
(86) Internationale Anmeldenummer: PCT/DE2015/200439
(87) Internationale Veröffentlichungsnummer: WO 2016/029912

(56) Entgegenhaltungen:
- EP-A1- 2 387 673
- DE-A1-102010 051 446

## Beschreibung

Die vorliegende Erfindung betrifft eine Doppelkupplung gemäß dem Oberbegriff des Patentanspruchs 1. Insbesondere betrifft die Erfindung eine Doppelkupplung zum Einsatz in einem Motorrad.

Eine Doppelkupplung wird in Verbindung mit einem Doppelkupplungsgetriebe verwendet, um einen Gangwechsel zwischen aufeinander folgenden Gängen rasch und präzise durchzuführen. Dabei wirkt ein Antriebsmotor auf eine Eingangsseite der Doppelkupplung und zwei unabhängig voneinander steuerbare Reibkupplungen können jeweils einen Reibschluss zu einer zugeordneten Getriebeeingangswelle herstellen. An jeder Getriebeeingangswelle kann ein Gangradpaar aktiv sein, wobei die Gangradpaare der unterschiedlichen Getriebeeingangswellen üblicherweise auf die gleiche Ausgangswelle wirken. Ist die erste Kupplung geöffnet und die zweite geschlossen, so ist ein vorbestimmter Gang eingelegt. Um einen anderen Gang einzulegen, wird die erste Kupplung geöffnet und die zweite geschlossen.

Um die Technologie der Doppelkupplung bzw. des Doppelkupplungsgetriebes von einem Kraftfahrzeug auf ein Motorrad zu übertragen, müssen einige Randbedingungen beachtet werden. Beispielsweise muss eine Betätigungskraft für die beiden Reibkupplungen üblicherweise durch einen Fahrer des Motorrads manuell aufgebracht werden. Ist das zu übertragende Drehmoment groß, so kann der Fahrer auf Dauer damit überfordert sein. Um die manuell aufzubringenden Kupplungskräfte zu reduzieren, ist es bekannt, eine manuell betätigbare Vorkupplung und eine durch die Vorkupplung betätigbare Hauptkupplung einzusetzen. WO 2011/050772 A1 und WO 2011/050775 A1 zeigen Ausführungsbeispiele für derartige, auch Servokupplungen genannte Einrichtungen.

Servokupplungen können jedoch relativ großen Bauraum erfordern und gehen mit einer gewissen Komplexität einher. So müssen für eine Doppelkupplung mit zwei Servokupplungen insgesamt vier Kupplungen aufgebaut werden, deren Zusammenspiel genau gesteuert sein muss. Eine derartig komplexe Doppelkupplung kann einen erhöhten Kosteneinsatz in Entwicklung und Produktion bedingen.

Aus der DE 10 2010 051 446 A1 und der WO 2010/081455 A1 sind Doppelkupplungen bekannt, die auf den Oberbegriff des Patentanspruchs 1 lesbar sind.

Es ist Aufgabe der vorliegenden Erfindung, eine verbesserte Doppelkupplung, insbesondere zum Einsatz an einem Motorrad, anzugeben. Die Erfindung löst diese Aufgabe mittels einer Doppelkupplungseinrichtung mit den Merkmalen des unabhängigen Anspruchs. Unteransprüche geben bevorzugte Ausführungsformen wieder.

Eine Doppelkupplungseinrichtung umfasst eine Eingangsseite, eine erste Ausgangsseite und eine zweite Ausgangsseite, die um eine Drehachse drehbar angeordnet sind, ferner eine erste, radial äußere Reibkupplung zur Herstellung eines Reibschlusses zwischen der Eingangsseite und der ersten Ausgangsseite und eine zweite, radial innere Reibkupplung zur Herstellung eines Reibschlusses zwischen der Eingangsseite und der zweiten Ausgangsseite. Dabei umfasst jede Reibkupplung ein erstes Reibelement, das drehmomentschlüssig in die Eingangsseite eingreift, ein zweites Reibelement, das drehmomentschlüssig in die zugeordnete Ausgangsseite eingreift, ein Steuerelement zur Bereitstellung einer axialen Anpresskraft auf die Reibelemente und ein Blattfederelement, das axial zwischen dem Steuerelement und den Reibelementen angeordnet ist.

Das Blattfederelement kann eine Verstärkung der Anpresskraft in Abhängigkeit einer Verdrehung seiner Enden bereitstellen. Durch die Verwendung des Federelementprinzips kann eine Betätigungskraft für die Kupplungen reduziert sein, sodass ein Betätigungssystem für die Reibkupplungen vereinfacht aufgebaut oder kleiner dimensioniert sein kann. Eine Belastung einer für die Betätigung vorgesehenen Hilfsenergiequelle, beispielsweise einer Hydraulikpumpe oder eines elektrischen Systems, kann dadurch gering gehalten sein. Die Gesamtmasse eines umgebenden Fahrzeugs, insbesondere eines Motorrads, kann gering gehalten sein. Bei manueller Betätigung der Reibkupplungen kann eine geringe durch den Fahrer aufzubringende Kraft realisiert sein, sodass ein entspanntes Fahren mit wenig anstrengenden Gangwechseln unterstützt sein kann. Außerdem kann der Einsatz der radial versetzten Blattfederelementkupplungen dazu beitragen, axialen Bauraum der Doppelkupplungseinrichtung einzusparen. Dadurch kann eine Einheit aus der Doppelkupplungseinrichtung und einem Antriebsmotor oder einem Getriebe schmaler bauen, sodass ein Schräglagenwinkel eines Motorrads, in dem die Doppelkupplungseinrichtung verbaut ist, groß sein kann.

Das Blattfederelement ist um die Drehachse angestellt oder spiralförmig gewunden. Eine Spirale oder Schneckenlinie ist eine Kurve, die um einen Punkt oder eine Achse verläuft und sich je nach Betrachterperspektive von diesem/r entfernt oder annähert. Ein angestelltes Element schließt einen spitzen Winkel mit der Drehachse ein, erstreckt sich jedoch geradlinig und verläuft nicht um die Drehachse herum. Das angestellte oder spiralförmig gewundene Blattfederelement kann axial besonderes kompakt bauen und eine gewünschte Verstärkung der axialen Anpresskräfte auf die Reibelemente besonderes gut realisieren.

Bevorzugterweise ist ein axial verlaufender Abschnitt der Eingangsseite dazu eingerichtet, radial außen formschlüssig in das erste Reibelement der ersten Reibkupplung und radial innen formschlüssig in das erste Reibelement der zweiten Reibkupplung einzugreifen.

Durch das Anordnen der Reibkupplungen auf unterschiedlichen radialen Seiten eines gemeinsamen Elements, nämlich des axialen Abschnitts der Eingangsseite, kann ein radial kompakter Aufbau der Doppelkupplungseinrichtung erzielt werden. Die Anzahl der für die Doppelkupplungseinrichtung erforderlichen Bauelemente kann verringert sein. Herstellungskosten können dadurch gesenkt sein.

Der Abschnitt kann einstückig aus einem Blech herstellbar sein. Dadurch können Produktionskosten gesenkt sein. Außerdem können Eingriffsstrukturen, die für eine Kraftübertragung radial innen und außen jeweils an das erste Reibelement verwendet werden können, einfach und kostengünstig ausgebildet werden.

An jeder Reibkupplung können mehrere Reibelemente vorgesehen sein. Dadurch ergeben sich Mehrscheibenkupplungen, die insbesondere beim Einsatz an einem Motorrad vorteilhaft eingesetzt werden können.

Die Doppelkupplungseinrichtung kann dazu eingerichtet sein, in einem Ölbad zu laufen. Diese Ausführungsform wird auch nass oder nasslaufend bezeichnet. Kühlung, Schmierung oder Reinigung von Elementen der Doppelkupplungseinrichtung können dadurch erleichtert sein. Außerdem kann ein Ansprechverhalten von durch Gleitreibung miteinander in Eingriff stehenden Reibelementen leichter steuerbar sein. Eine Integration mit einem ebenfalls in einem Ölbad laufenden Getriebe kann erleichtert sein.

Es kann ein axiales Betätigungselement umfasst sein, das auf das Blattfederelement einer der Reibkupplungen wirkt, wobei das Blattfederelement dazu eingerichtet ist, die Reibelemente bei ausbleibender axialer Betätigungskraft auf das Betätigungselement aneinander zu pressen, sodass die Reibkupplung schließt. Diese Ausführungsform wird auch "normally closed" genannt.

In einer weiteren Ausführungsform ist ein axiales Betätigungselement umfasst, das auf das Blattfederelement einer der Reibkupplungen wirkt, wobei das Blattfederelement dazu eingerichtet ist, die Reibelemente bei ausbleibender axialer Betätigungskraft auf das Betätigungselement auseinander zu pressen, sodass die Reibkupplung öffnet. Diese Ausführungsform wird auch "normally open" genannt.

Die beiden letztgenannten Ausführungsformen können miteinander kombiniert werden, indem die eine Reibkupplung durch Betätigen geöffnet und die andere durch Betätigen geschlossen wird. Daraus können sich Vorteile in der Bereitstellung der Betätigungskräfte ergeben.

Die Erfindung wird nun mit Bezug auf die beigefügten Figuren genauer beschrieben. Dabei zeigen im Einzelnen:
- Fig. 1: einen Längsschnitt durch eine Doppelkupplungseinrichtung;
- Fign. 2 und 3: Details der Doppelkupplungseinrichtung von Fig. 1;
- Fig. 4: Varianten der Ausgestaltung der Doppelkupplungseinrichtung der Figuren 1 bis 3 und
- Fig. 5: eine Schnittansicht einer der Reibkupplungen der Doppelkupplungseinrichtung der vorangehenden Figuren.

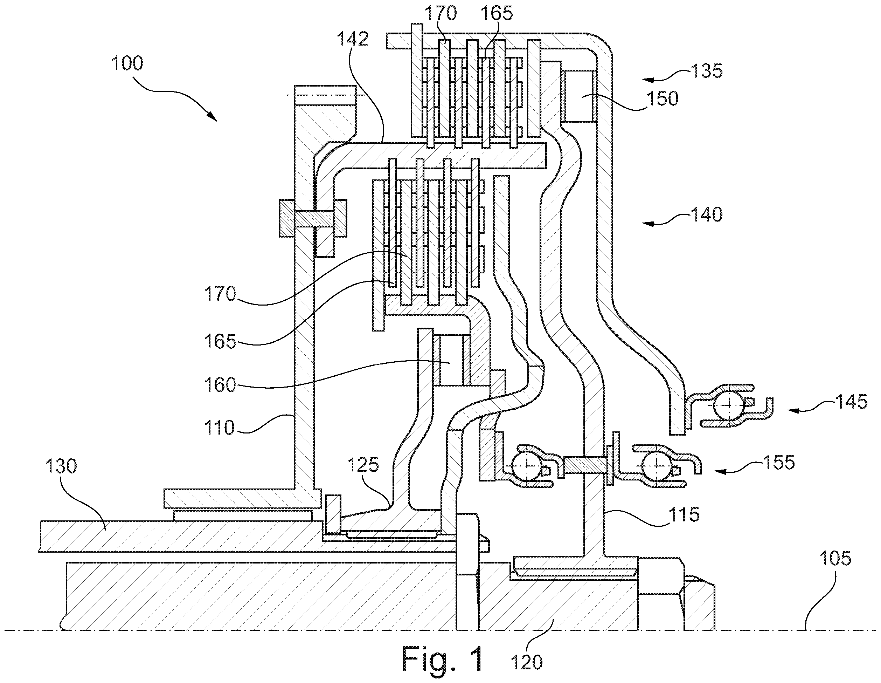

Fig. 1 zeigt einen Längsschnitt durch eine Doppelkupplungseinrichtung 100. Um eine Drehachse 105 sind eine Eingangsseite 110 zur Verbindung mit einem Antriebsmotor, eine erste Ausgangsseite 115 zur Verbindung mit einer ersten Getriebeeingangswelle 120 und eine zweite Ausgangsseite 125 zur Verbindung mit einer zweiten Getriebeeingangswelle 130 angeordnet. Die Getriebeeingangswellen 120 und 130 sind bevorzugterweise koaxial zur Drehachse 105 ausgeführt.

Eine erste Reibkupplung 135 zur Herstellung eines Reibschlusses zwischen der Eingangsseite 110 und der ersten Ausgangsseite 115 und eine zweite Reibkupplung 140 zur Herstellung eines Reibschlusses zwischen der Eingangsseite 110 und der zweiten Ausgangsseite 125 sind radial versetzt zueinander angeordnet. In der exemplarisch gewählten Ausführungsform ist die erste Reibkupplung 135 ohne Betätigung geöffnet ("normally open") und die zweite Reibkupplung 140 ohne Betätigung geschlossen ("normally closed"). In Figur 1 ist die erste Reibkupplung 135 geöffnet, weil sie nicht betätigt ist, und die zweite Reibkupplung 140 ist geöffnet, weil sie betätigt ist.

Wie dargestellt ist es bevorzugt, dass ein axial verlaufender Abschnitt 142 der Eingangsseite 110 gleichermaßen für den drehmomentschlüssigen Eingriff der ersten Reibkupplung 135 und der zweiten Reibkupplung 140 verwendet wird. Dieser Abschnitt 142 ist in beispielhafter Weise mit einem radial verlaufenden Abschnitt zusammengefügt; in anderen Ausführungsformen kann auch eine einstückige Implementation beider Abschnitte vorliegen. Der Abschnitt 142 ist bevorzugterweise dazu eingerichtet, ein drehmomentschlüssiges Widerlager sowohl für Reibelemente der äußeren ersten Reibkupplung 135 als auch der inneren zweiten Reibkupplung 140 darzustellen. Wie dargestellt können die Reibelemente beider Reibkupplungen 135, 140 formschlüssig und bevorzugterweise auch axial verschiebbar in den Abschnitt 142 eingreifen. Dazu kann der Abschnitt 142 eine Außenverzahnung tragen, in die die Reibelemente der ersten Reibkupplung 135 eingreifen, und eine Innenverzahnung, in die die Reibelemente der zweiten Reibkupplung 140 eingreifen. In einer Ausführungsform umfasst der Abschnitt 142 einen Streifen um die Drehachse 105 umlaufenden Materials konstanter Dicke, das so geformt ist, dass es abwechselnd auf zwei unterschiedlichen Radien um die Drehachse verläuft, sodass sich die Außenverzahnung und die Innenverzahnung ergeben.

Der ersten Reibkupplung 135 sind eine erste Betätigungseinrichtung 145 und ein erstes Blattfederelement 150 zugeordnet, der zweiten Reibkupplung 140 in korrespondierender Weise eine zweite Betätigungseinrichtung 155 und ein zweites Blattfederelement 160. Die Blattfederelemente 150 und 160 wirken den Betätigungseinrichtungen 145 und 155 in axialer Richtung entgegen. In der dargestellten Ausführungsform bewirken die Blattfederelemente 150 und 160 jeweils ein Schließen der Reibkupplungen 135 und 140, während ein Betätigen mittels der Betätigungseinrichtungen 145 und 155 jeweils ein Öffnen der Reibkupplungen 135 und 140 bewirkt. Diese Konstellation wird auch "normally closed" genannt; in entsprechender Weise ist auch eine "normally open"-Anordnung möglich, bei der die jeweilige Betätigungseinrichtung 145, 155 zum Schließen und das jeweilige Blattfederelement 150, 160 zum Öffnen der zugeordneten Reibkupplung 135, 140 verwendet wird. Ferner ist in der dargestellten Ausführungsform eine "schiebende" Betätigung der Reibkupplungen 135, 140 vorgesehen, wobei eine axial wirkende Kompressionskraft auf die Betätigungseinrichtungen 145, 155 wirkt, um diese zu betätigen. In einer alternativen Ausführungsform kann jedoch auch eine "ziehende" Betätigung der Einrichtungen 145, 155 erfolgen. Die Betätigung der Einrichtungen 145, 155 kann beispielsweise mittels eines elektrischen oder hydraulischen Aktuators erfolgen.

Die Reibkupplungen 135 und 140 umfassen jeweils eine Anzahl Lamellen 165 und Reibscheiben 170, die alternierend als axial angeordneter Stapel vorgesehen sind. Lamellen 165 greifen drehmomentschlüssig in die Eingangsseite 110 und Reibscheiben 170 in die zugeordneten Ausgangsseiten 115, 125 ein. In anderen Ausführungsformen können Lamellen 165 und Reibscheiben 170 auch vertauscht sein oder es können ausschließlich Lamellen 165 oder ausschließlich Reibscheiben 170 verwendet werden. Bevorzugterweise ist zwischen axial aneinander anliegenden Elementen 165, 170 noch ein Reibbelag vorgesehen.

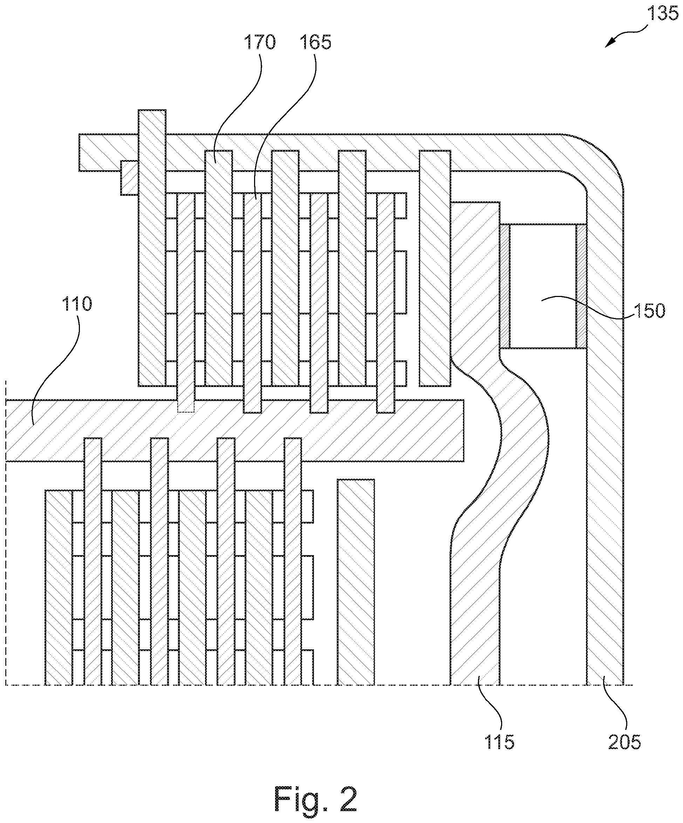

Fig. 2 zeigt im Detail der Doppelkupplungseinrichtung 100 im Bereich der ersten Reibkupplung 135. Die Ausgangsseite 115 umfasst einen radial verlaufenden Abschnitt, in den die Reibscheiben 170 drehmomentschlüssig eingreifen, und einen optionalen axial verlaufenden Abschnitt zur drehmomentschlüssigen Verbindung mit der ersten Getriebeeingangswelle 120. Diese beiden Abschnitte sind drehmomentschlüssig miteinander verbunden. Die erste Betätigungseinrichtung 145 umfasst ein Steuerelement 205, das mit der ersten Ausgangsseite 115 verbunden ist. In der dargestellten Ausführungsform handelt es sich um eine einstückige Verbindung mit dem radialen Abschnitt der Ausgangsseite 115. Das Steuerelement 205 erstreckt sich radial nach innen, wobei zwischen ihm und einem Ende des Stapels von Lamellen 165 und Reibscheiben 170 das erste Blattfederelement 150 angeordnet ist. Das Blattfederelement 150 erstreckt sich in einer bevorzugten Ausführungsform spiralförmig um die Drehachse 105 oder ist bezüglich der Drehachse 105 angestellt und weist weiter bevorzugt eine große Federsteifigkeit auf, um auch eine kleine axiale Bewegung des Steuerelements 205 auf den Stapel von Lamellen 165 und Reibscheiben 170 zu übertragen. Dadurch kann ein Reibschluss zwischen der Eingangsseite 110 und der Ausgangsseite 115 hergestellt werden, sodass ein Drehmoment durch die Reibkupplung 135 übertragen werden kann. Durch die relative Drehung der Eingangsseite 110 gegenüber der ersten Ausgangsseite 115 wird das Blattfederelement 150 auf Stauchung beansprucht. Dadurch kann sich das Blattfederelement 150 ein wenig zwischen dem Steuerelement 205 und dem Ende des Stapels von Lamellen 165 und Reibscheiben 170 verkanten, sodass eine axiale Spreizkraft entsteht, die die axial auf die Lamellen 165 und Reibscheiben 170 wirkende Anpresskraft vergrößert. Die Schließkraft auf die Reibkupplung 135 wird in diesem Fall also durch einen Teil des über die Reibkupplung 135 übertragenen Drehmoments verstärkt. Die axial auf die Lamellen 165 und Reibscheiben 170 wirkende Anpresskraft kann daher um ein Vielfaches größer sein als eine ursprünglich bewirkte Anpresskraft des Steuerelements 205, bevor ein Reibschluss zwischen den Lamellen 165 und den Reibscheiben 170 entstand. Die Betätigung der Reibkupplung 135 kann so mit einer geringeren Kraft erfolgen als auf die Lamellen 165 und Reibscheiben 170 wirkt, sodass beispielsweise mittels manueller Betätigung große Drehmomente über die Reibkupplung 135 sicher gekoppelt oder getrennt werden können.

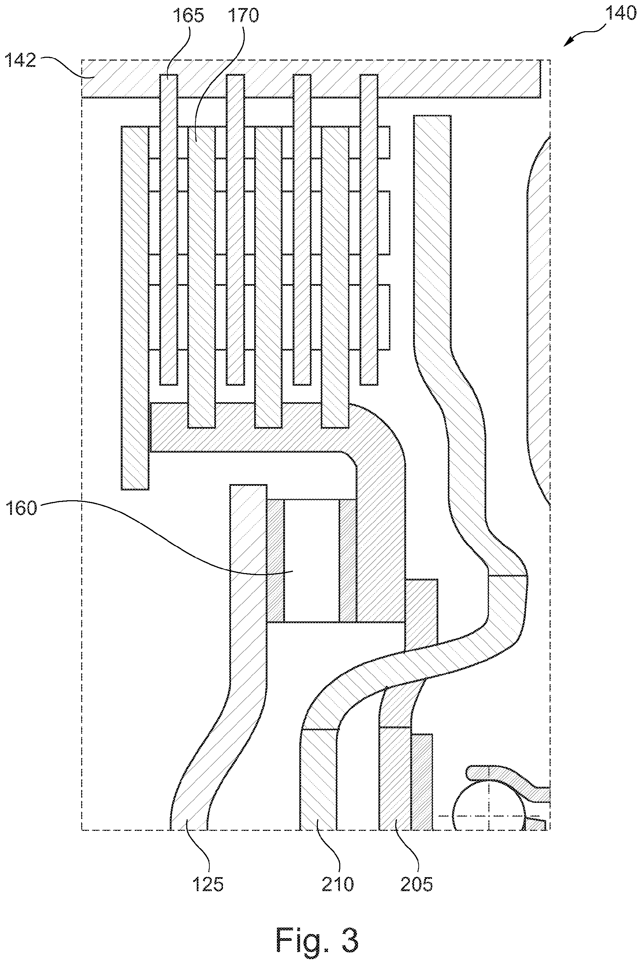

Fig. 3 zeigt ein Detail der Doppelkupplungseinrichtung 100 von Fig. 1 im Bereich der zweiten Reibkupplung 140. Die zweite Reibkupplung 140 ist durch eine axiale Betätigungskraft auf das Steuerelement 205 geöffnet. Durch die Betätigungskraft wird das zweite Blattfederelement 160 in axialer Richtung komprimiert. Genau wie das erste Blattfederelement 150 umfasst das zweite Blattfederelement 160 bevorzugterweise ein bezüglich der Drehachse 105 angestelltes oder ein spiralförmiges Element, das sich um die Drehachse 105 erstreckt. Lässt die in Fig. 3 nach links wirkende axiale Betätigungskraft des Steuerelements 205 nach, so entspannt sich das zweite Blattfederelement 160 und drückt den Stapel von Lamellen 165 und Reibscheiben 170 gegen ein Widerlager 210, sodass der Stapel komprimiert und die Lamellen 165 in Reibschluss mit den Reibscheiben 170 geraten. Dadurch wirkt ein Drehmoment zwischen der zweiten Ausgangsseite 125 und dem Steuerelement 205, sodass das zweite Blattfederelement 160 entlang seiner spiralförmigen Erstreckungsrichtung auf Stauchung beansprucht wird. Das zweite Blattfederelement 160 leitet die Verdrehkraft um, sodass sich eine zusätzliche axiale Kraft ergibt. Der Stapel von Lamellen 165 und Reibscheiben 170 wird dadurch stärker gegen das Widerlager 210 gepresst, sodass der Reibschluss zunimmt.

Auch in dieser Variante kann ein Teil der über die zweite Reibkupplung 140 übertragenen Kraft dazu verwendet werden, die zweite Reibkupplung 140 zu schließen. Es tritt eine Selbstverstärkung der aufgebrachten Betätigungskraft auf das Steuerelement 205 auf. Die zweite Reibkupplung 140 kann daher ebenfalls unter Aufbringung nur kleiner Betätigungskräfte fest geschlossen werden, sodass auch ein großes Drehmoment zwischen der Eingangsseite 110 und der Ausgangsseite 125 übertragen werden kann.

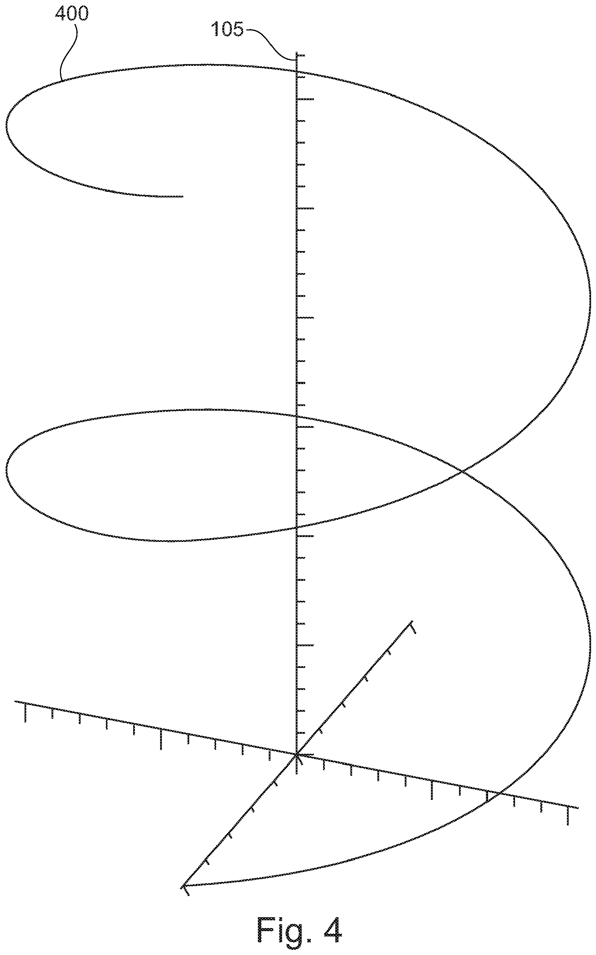

Fig. 4 zeigt eine schematische Darstellung einer Helix 400. Ein Abschnitt der Helix 400, der bevorzugterweise weniger als 360° um die Drehachse 105 abdeckt, legt die bevorzugte Form für eines der Blattfederelemente 150 und 160 fest, wenn dieses spiralförmig gewunden ausgeführt ist. Bezüglich einer bevorzugten Übertragungsrichtung von Drehmoment durch die Doppelkupplungseinrichtung 100 ist die Drehrichtung der Helix 400 so gewählt, dass die beschriebene Beanspruchung auf Stauchung entlang ihrer Erstreckungsrichtung erfolgt, wenn die jeweilige Reibkupplung 135, 140 geschlossen werden soll. Anders ausgedrückt kann durch Verdrehen der Enden eines Blattfederelements 150, 160 in Stauchrichtung um die Drehachse 105 eine axiale Spreizkraft der Enden des Blattfederelements 150, 160 bewirkt werden.

Ein spiralförmiges Blattfederelement 150, 160 mit der Form der in Fig. 4 dargestellten Helix 400 erstreckt sich in einer Ansicht auf die Drehachse 105 im Uhrzeigersinn vom Betrachter weg. Wird das dem Betrachter zugewandte Ende im Uhrzeigersinn gegenüber dem anderen Ende um die Drehachse 105 im Uhrzeigersinn verdreht, entsteht auf die Enden des Blattfederelements 150, 160 eine axiale Spreizkraft entlang der Drehachse 105, die die Enden axial auseinander treibt. Die Verdrehbewegung entsteht in einer der Reibkupplungen 135, 140 der vorangehenden Figuren, indem das Blattfederelement 150, 160 axial an Elemente mit unterschiedlichen Drehzahlen angepresst wird. Durch den Verdreheffekt wird die Anpresskraft vergrößert, sodass eine kleine Anpress- bzw. Betätigungskraft ausreichen kann, um einen Öffnungs- bzw. Schließvorgang der zugeordneten Reibkupplung 135, 140 auszulösen. Ein Teil des über die Reibkupplung 135, 140 übertragenen Drehmoments wird dabei für die Bereitstellung der axialen Kraft auf die Reibelemente 165, 170 verwendet.

In einer weiteren Ausführungsform umfasst eines der spiralförmigen Blattfederelemente 150, 160 mehrere der dargestellten Elemente, die ineinander eingeschraubt sind. In noch einer weiteren Ausführungsform ist eines der Blattfederelemente 150,160 umfangsseitig unterbrochen.

### Bezugszeichenliste

- 100: Doppelkupplungseinrichtung
- 105: Drehachse
- 110: Eingangsseite
- 115: erste Ausgangsseite
- 120: erste Getriebeeingangswelle
- 125: zweite Ausgangsseite
- 130: zweite Getriebeeingangswelle
- 135: erste Reibkupplung
- 140: zweite Reibkupplung
- 145: erste Betätigungseinrichtung
- 150: erstes Blattfederelement
- 155: zweite Betätigungseinrichtung
- 160: zweites Blattfederelement
- 165: Lamelle
- 170: Reibscheibe

- 205: Steuerelement
- 210: Widerlager

## Patentansprüche

1. Doppelkupplungseinrichtung (100) umfassend:
- eine Eingangsseite (110), eine erste Ausgangsseite (115) und eine zweite Ausgangsseite (125), die um eine Drehachse (105) drehbar angeordnet sind;
- eine erste, radial äußere Reibkupplung (135) zur Herstellung eines Reibschlusses zwischen der Eingangsseite (110) und der ersten Ausgangsseite (115);
- eine zweite, radial innere Reibkupplung (140) zur Herstellung eines Reibschlusses zwischen der Eingangsseite (110) und der zweiten Ausgangsseite (125),
- wobei jede Reibkupplung (135, 140) folgendes umfasst:
∘ ein erstes Reibelement (165, 170), das drehmomentschlüssig in die Eingangsseite (110) eingreift, und ein zweites Reibelement (170, 165), das drehmomentschlüssig in die zugeordnete Ausgangsseite (115, 125) eingreift, und
∘ ein Steuerelement (205) zur Bereitstellung einer axialen Anpresskraft auf die Reibelemente,
**dadurch gekennzeichnet, dass** ein angestelltes oder spiralförmig um die Drehachse gewundenes Blattfederelement (150, 160) axial zwischen dem Steuerelement (205) und den Reibelementen (165, 170) angeordnet ist.

2. Doppelkupplungseinrichtung (100) nach Anspruch 1, wobei ein axial verlaufender Abschnitt (142) der Eingangsseite (110) dazu eingerichtet ist, radial außen formschlüssig in das erste Reibelement (165, 170) der ersten Reibkupplung (135) und radial innen formschlüssig in das erste Reibelement (170, 165) der zweiten Reibkupplung (140) einzugreifen.

3. Doppelkupplungseinrichtung (100) nach Anspruch 2, wobei der Abschnitt (142) einstückig aus einem Blech herstellbar ist.

4. Doppelkupplungseinrichtung (100) nach einem der vorangehenden Ansprüche, wobei jeweils mehrere Reibelemente (165, 170) vorgesehen sind.

5. Doppelkupplungseinrichtung (100) nach einem der vorangehenden Ansprüche, wobei die Doppelkupplungseinrichtung (100) dazu eingerichtet ist, in einem Ölbad zu laufen.

6. Doppelkupplungseinrichtung (100) nach einem der vorangehenden Ansprüche, ferner umfassend ein axiales Betätigungselement (145, 155), das auf das Blattfederelement einer der Reibkupplungen (135, 140) wirkt, wobei das Blattfederelement (150, 160) dazu eingerichtet ist, die Reibelemente (165, 170) bei ausbleibender axialer Betätigungskraft auf das Betätigungselement (145, 155) aneinander zu pressen, sodass die Reibkupplung (135, 140) schließt.

7. Doppelkupplungseinrichtung (100) nach einem der vorangehenden Ansprüche, ferner umfassend ein axiales Betätigungselement (145, 155), das auf das Blattfederelement einer der Reibkupplungen (135, 140) wirkt, wobei das Blattfederelement (150, 160) dazu eingerichtet ist, die Reibelemente (165, 170) bei ausbleibender axialer Betätigungskraft auf das Betätigungselement (145, 155) auseinander zu pressen, sodass die Reibkupplung (135, 140) öffnet.

## Claims

1. Double clutch (100) comprising:
- an input side (110), a first output side (115) and a second output side (125) which are arranged such that they can be rotated about a rotational axis (105) ;
- a first, radially outer friction clutch (135) for establishing a frictionally locking connection between the input side (110) and the first output side (115);
- a second, radially inner friction clutch (140) for establishing a frictionally locking connection between the input side (110) and the second output side (125),
- each friction clutch (135, 140) comprising the following:
∘ a first friction element (165, 170) which engages in a torque-transmitting manner into the input side (110), and a second friction element (170, 165) which engages in a torque-transmitting manner into the associated output side (115, 125), and
∘ a control element (205) for providing an axial pressing force on the friction elements,
**characterized in that** a leaf spring element (150, 160) which is set against them or is wound spirally about the rotational axis is arranged axially between the control element (205) and the friction elements (165, 170).

2. Double clutch device (100) according to Claim 1, an axially running section (142) of the input side (110) being set up to engage radially on the outside in a positively locking manner into the first friction element (165, 170) of the first friction clutch (135) and radially on the inside in a positively locking manner into the first friction element (170, 165) of the second friction clutch (140).

3. Double clutch device (100) according to Claim 2, it being possible for the section (142) to be produced in one piece from a metal sheet.

4. Double clutch device (100) according to one of the preceding claims, in each case a plurality of friction elements (165, 170) being provided.

5. Double clutch device (100) according to one of the preceding claims, the double clutch device (100) being set up to run in an oil bath.

6. Double clutch device (100) according to one of the preceding claims, comprising, furthermore, an axial actuating element (145, 155) which acts on the leaf spring element of one of the friction clutches (135, 140), the leaf spring element (150, 160) being set up to press the friction elements (165, 170) onto one another in the case of an absent axial actuating force on the actuating element (145, 155), with the result that the friction clutch (135, 140) closes.

7. Double clutch device (100) according to one of the preceding claims, comprising, furthermore, an axial actuating element (145, 155) which acts on the leaf spring element of one of the friction clutches (135, 140), the leaf spring element (150, 160) being set up to press the friction elements (165, 170) apart from one another in the case of an absent axial actuating force on the actuating element (145, 155), with the result that the friction clutch (135, 140) opens.

## Revendications

1. Système d'embrayage double (100) comprenant:
- un côté d'entrée (110), un premier côté de sortie (115) et un second côté de sortie (125), qui sont disposés de façon rotative autour d'un axe de rotation (105);
- un premier embrayage à friction radialement extérieur (135), pour la réalisation d'une liaison par friction entre le côté d'entrée (110) et le premier côté de sortie (115);
- un second embrayage à friction radialement intérieur (140), pour la réalisation d'une liaison par friction entre le côté d'entrée (110) et le second côté de sortie (125) ;
- dans lequel chaque embrayage à friction (135, 140) comprend les éléments suivants:
∘ un premier élément de friction (165, 170), qui s'engage en transmission de couple dans le côté d'entrée (110), et un second élément de friction (170, 165), qui s'engage en transmission de couple dans le second côté de sortie associé (115, 125), et
∘ un élément de commande (205) pour la production d'une force de pression axiale sur les éléments de friction,
**caractérisé en ce qu'**un élément de ressort à lame (150, 160) appliqué ou enroulé en spirale autour de l'axe de rotation est disposé axialement entre l'élément de commande (205) et les éléments de friction (165, 170).

2. Système d'embrayage double (100) selon la revendication 1, dans lequel une partie s'étendant axialement (142) du côté d'entrée (110) est conçue pour s'engager radialement extérieurement par emboîtement dans le premier élément de friction (165, 170) du premier embrayage à friction (135) et radialement intérieurement par emboîtement dans le premier élément de friction (170, 165) du second embrayage à friction (140).

3. Système d'embrayage double (100) selon la revendication 2, dans lequel la partie (142) peut être fabriquée d'une seule pièce en une tôle.

4. Système d'embrayage double (100) selon l'une quelconque des revendications précédentes, dans lequel il est chaque fois prévu plusieurs éléments de friction (165, 170).

5. Système d'embrayage double (100) selon l'une quelconque des revendications précédentes, dans lequel le système d'embrayage double (100) est conçu pour tourner dans un bain d'huile.

6. Système d'embrayage double (100) selon l'une quelconque des revendications précédentes, comprenant en outre un élément d'actionnement axial (145, 155), qui agit sur l'élément de ressort à lame d'un des embrayages à friction (135, 140), dans lequel l'élément de ressort à lame (150, 160) est conçu pour presser l'un sur l'autre les éléments de friction (165, 170) lorsque la force de pression axiale sur l'élément d'actionnement (145, 155) disparaît, de telle manière que l'embrayage à friction (135, 140) se ferme.

7. Système d'embrayage double (100) selon l'une quelconque des revendications précédentes, comprenant en outre un élément d'actionnement axial (145, 155), qui agit sur l'élément de ressort à lame d'un des embrayages à friction (135, 140), dans lequel l'élément de ressort à lame (150, 160) est conçu pour repousser l'un de l'autre les éléments de friction (165, 170) lorsque la force d'actionnement sur l'élément d'actionnement (145, 155) disparaît, de telle manière que l'embrayage à friction (135, 140) s'ouvre.
